# EUROPEAN PATENT APPLICATION

(11) **EP 3 349 172 A1**
(43) Date of publication of application: **18.07.2018**
(21) Application number: 15903562.5
(22) Date of filing: 08.09.2015
(51) Int. Cl.: G06Q 50/02

(54) **MINING MACHINE LOGGING SYSTEM, VEHICLE-MOUNTED TERMINAL DEVICE, AND MINING MACHINE LOGGING METHOD**

(71) Applicant: Hitachi Construction Machinery Co., Ltd., Taito-ku, Tokyo 110-0015 (JP)
(72) Inventor: KAWAMATA Yukihiro, Tokyo 100-8280 (JP); HAMADA Tomoyuki, Tsuchiura-shi Ibaraki 300-0013 (JP); KATOU Manabu, Tokyo 100-8280 (JP); MORIZANE Hiroto, Tokyo 100-8280 (JP)
(74) Representative: Beetz & Partner mbB
(86) International application number: PCT/JP2015/075520
(87) International publication number: WO 2017/042897

(57) **Abstract**

An on-board terminal device includes a volatile storage unit, a non-volatile storage unit , a map data storage unit that stores map data indicative of a target route, an error calculation unit that calculates an amount of positional offset of own mining machine from the target route on a basis of the map data and own mining machine position information, a departure determination unit which determines that the own mining machine has departed from the target route, and a data storage destination control unit that, if the departure determination unit determines to have departed, extracts log data out of the log data stored in the volatile storage unit, archives and stores the extracted log data in the non-volatile storage unit, and also stores log data, which would be outputted after the time point of the departure, in the non-volatile storage unit.

## Description

### Technical Field

This invention relates to a logging technology for mining machines.

### Background Art

A mining field includes a loading site where rock and ore are loaded, a dumping site where rock and ore are unloaded, a dressing mill site where ore is dressed, and a parking lot where mining dump trucks are parked. These loading site, dumping site, dressing mill site and parking lot are connected by haul roads, along which mining dump trucks travel. Plural dump trucks perform haul work of rock and ore in the mining field, and go back and forth among destinations such as the loading site, the dumping site and the dressing mill site.

Along a haul road, dump trucks travel carefully to avoid colliding from behind, and dump trucks pass each other while traveling in opposite directions. There is a technology that stores log data of each dump truck for the sake of safety management of the dump trucks.

For example, Patent Document 1 discloses a system that performs logging of image data and operational parameter data before and after the occurrence of an accident on a mining machine. In an illustrated embodiment, objects are detected using a camera mounted on a mining machine, the results of the detection are compared with an electronic map, and from the results of the comparison, image data are logged along with operational parameter data.

### Prior Art Document

### Patent Document

Patent Document 1: US 8,473,143 B2

### Disclosure of the Invention

### Problem to Be Solved by the Invention

For the safe travel of each mining machine that is autonomously traveling along a predetermined target route in a mine, there is a desire to collect log data upon its departure from the target route irrespective of its travel speed or the existence or non-existence of other mining machines.

In the above-described logging system of Patent Document 1, however, log data cannot be acquired if there is no collision risk object within a collision detection range of an obstacle sensor such as a camera, so that no log data can be stored in the event of a departure of a mining machine by itself from a target route during autonomous travel. The problem of incapability to meet the above-described requirement, therefore, still remains unresolved.

With a view to resolving the above-described problem, the present invention has as an object thereof the provision of a technology for performing collection of log data for the analysis of the cause of departure of a mining machine from a target route.

### Means for Solving the Problem

Therefore, the present invention provides a logging system for a mining machine that travels along a target route . The logging system includes a position calculating device that measures a position of the mining machine as an own mining machine and outputs own mining machine position information, and an on-board terminal device that stores log data indicative of travel conditions of the mining machine. The on-board terminal device includes a volatile storage unit that upon creation of the log data, temporarily store the log data, a non-volatile storage unit that continues to store immediately-preceding log data, which have been extracted from the log data temporarily stored in the volatile storage unit, until an instruction for data erasure is received, a map data storage unit that stores map data indicative of the target route, an error calculation unit that calculates an amount of positional offset of the own mining machine relative to the target route on a basis of the map data and own mining machine position information, a departure determination unit which determines that the own mining machine has departed from the target route if the calculated amount of positional offset has increased to a permissible amount of offset, at which the own machine is considered to be traveling on the target route, or greater, and a data storage destination management unit that, if the departure determination unit determines to have departed, extracts immediately-preceding log data, which have been stored from before and until a time point of the departure, out of the log data temporarily stored in the volatile storage unit, archives and stores the immediately-preceding log data in the non-volatile storage unit, and stores log data, which would be outputted after the time point of the departure, in the non-volatile storage unit.

### Advantageous Effects of the Invention

According to the present invention, it is possible to provide a technology for performing collection of log data for the analysis of the cause of departure of a mining machine from a target route. Problems, configurations and advantageous effects other than those described above will become apparent from the following description of embodiments.

### Brief Description of the Drawings

FIG. 1 is a diagram illustrating an outline of an autonomous travel system.
FIG. 2A is a hardware configuration diagram of a fleet management server, and FIG. 2B is a hardware configuration diagram of a dump truck.
FIG. 3 is a view depicting an external appearance of a dump truck.
FIG. 4 is a block diagram illustrating functional configurations of a fleet management server and on-board terminal device according to a first embodiment.
FIG. 5 is a sequence diagram illustrating a flow of logging processing.
FIG. 6 is a view showing an example of an initial setting screen in the fleet management server.
FIG. 7 is a diagram illustrating calculation processing of an amount of positional offset from a target route.
FIG. 8 is a block diagram illustrating functional configurations of a fleet management server and on-board terminal device according to a second embodiment.

### Modes for Carrying out the Invention

In the following embodiments, a description will be made by dividing each embodiment into plural sections or embodiments wherever needed for the sake of convenience. When the numbers and the like of elements (including the numbers of parts or components, numerical values, amounts, ranges, and so on) are referred to in the following embodiments, they shall not be limited to the specific numbers and may be greater or smaller than the specific numbers unless specifically indicated or unless apparently limited to such specific numbers in principle. In the following embodiments, their constituent elements (including processing steps and the like) are not absolutely essential unless specifically indicated so or unless considered to be clearly essential in principle.

Further, the individual configurations, functions, processing units, processing means and the like in the following embodiments may be partly or wholly realized, for example, as integrated circuits or other hardware. Alternatively, the below-described individual configurations, functions, processing units, processing means and the like may also be implemented as programs to be executed on a computer, in other words, may be implemented as software. Information of programs, tables, files and the like, which implement the individual configurations, functions, processing units, processing means and the like, can be stored in storage units such as memories or hard disks or storage media such as DVDs.

The embodiments of the present invention will hereinafter be described in detail based on the drawings. Throughout the drawings for describing the embodiments, members having the same functions are identified by the same or related designations, and their repeated descriptions will be omitted. It is also to be noted that in the following embodiments, the description of the same or similar parts will not be repeated in general unless specifically needed.

### <First Embodiment>

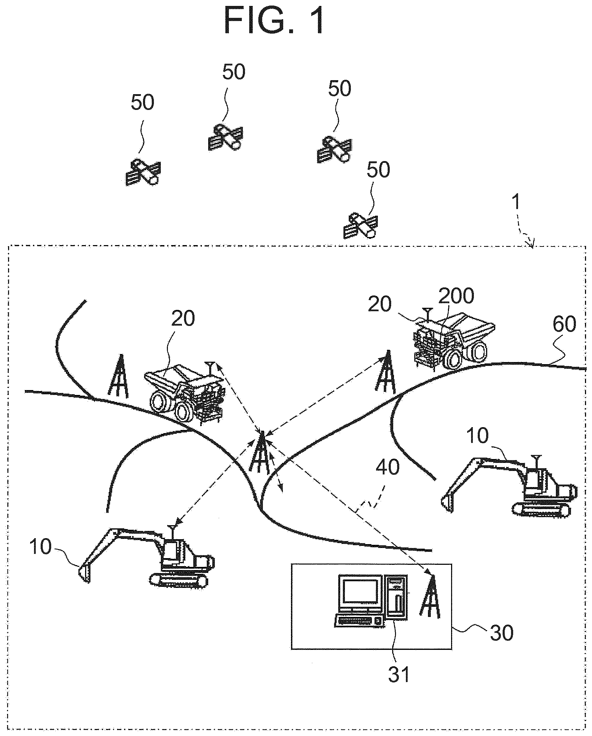

As this embodiment, a description will be made about an example in which the logging system according to the present invention for mining machines is applied to an autonomous travel system for haul vehicles as the mining machines (hereinafter called "dump trucks"). The fleet management server that controls autonomous travel of dump trucks executes functions as a log management server in this embodiment, and the on-board terminal device that is mounted on each dump truck to execute an autonomous travel function realizes the function as a terminal device that performs logging processing. First, with reference to FIG. 1, a description will be made about an outline of an autonomous travel system to which the logging system according to the present invention for mining machines has been applied. FIG. 1 is a diagram illustrating an outline of the autonomous travel system.

An autonomous travel system 1 illustrated in FIG. 1 has been configured by connecting plural dump trucks 20 and a fleet management server 31 each other for communications via wireless communication lines 40. The dump trucks 20 serve to haul payloads such as rock, ore and the like loaded from an excavator 10, which performs excavation and loading work at a quarry such as a mine. The fleet management server 31 is installed at a fleet management center 30 located near or remote from the quarry.

Each dump truck 20 hauls a payload by traveling along a target route on a haul road 60 that connects a loading site, where the excavator 10 is operating, and a dumping site each other.

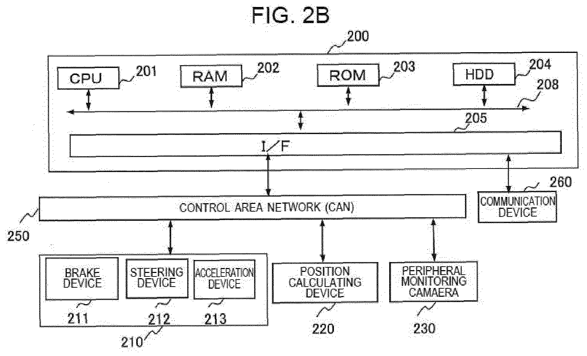

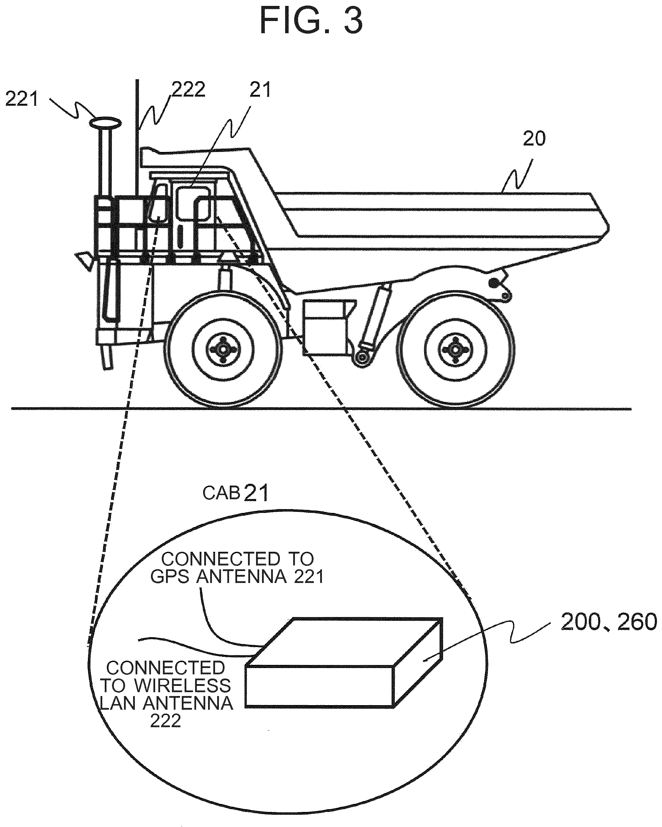

Each dump truck 20 includes a position calculating device 220 (see FIG. 2B), which receives positioning radio waves from global positioning system (GPS) satellites 50 and calculates its own position. The position calculating device 220 is connected to a GPS antenna 221 (see FIG. 3). The position calculating device 220 is not limited to relying on GPS, but can be one relying on an inertial measurement unit (IMU) or a system that specifies a position by using radio waves from a base station built on the ground. In such a case, the dump truck 20 includes, instead of the GPS antenna 221, an antenna for the system, a gyroscope, or a sensor that detects the rotational speed of a wheel.

The dump truck 20 also includes an on-board terminal device 200 mounted thereon to autonomously travel in accordance with instructions from the fleet management server 31. The on-board terminal device 200 in this embodiment has not only an autonomous travel function, but also a storage function for log data including peripheral monitoring image data and travel control data before and after any departure of the dump truck 20 from the target route.

If any preceding dump truck that is traveling on the same target route departs from the target route, the fleet management server 31 identifies a following dump truck that would next pass through the point of the departure, generates, for the following dump truck, archive storage command information that is to switch the storage destination of log data from temporary storage (volatile storage) to non-volatile storage before and after the point of departure, and transmits the archive storage command information to the following dump truck.

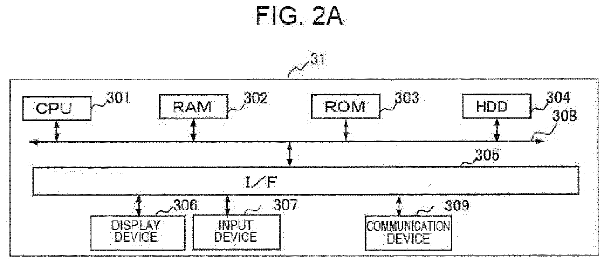

Referring next to FIGS. 2A, 2B and 3, a description will be made about hardware configurations of the fleet management server 31 and each dump truck 20 of FIGURE 1. FIG. 2A is the hardware configuration diagram of the fleet management server 31, and FIG. 2B is the hardware configuration diagram of the dump truck 20. FIG. 3 is a view depicting an external appearance of the dump truck 20.

As illustrated in FIG. 2A, the fleet management server 31 includes a central processing unit (CPU) 301, a random access memory (RAM) 302, a read only memory (ROM) 303, a hard disk drive (HDD) 304, an I/F 305, and a bus 308. The fleet management server 31 has been configured by connecting the CPU 301, RAM 302, ROM 303 and HDD 304 and the I/F 305 together via the bus 308. To the I/F 305, a display device 306, an input device 307 and a communication device 309 are connected. The communication device 309 is connected to a wireless LAN antenna 222 for connection to the wireless communication lines 40 (see FIG. 3).

Further, the fleet management server 31 includes the display device 306 and the input device 307, both of which are connected to the I/F 305.

The CPU 301 is an arithmetic logic unit, and controls operations of the entire fleet management server 31.

The RAM 302 is a volatile storage medium that enables high-speed reading and writing of information, and is used as a work area when the CPU 301 processes information.

The ROM 303 is a read-only, non-volatile storage medium, in which an autonomous travel management program and a log management program are stored.

The HDD 304 is a non-volatile storage medium that enables reading and writing of information, in which an operation system (OS), various control programs, application programs and like are stored.

The display device 306 is a user interface that allows an operator at the fleet management center 30 to visually confirm travel conditions of each dump truck 20, and is composed, for example, of a liquid crystal display (LCD).

The input device 307 is a user interface for allowing the operator to perform information input, for example, instructions such as the initiation of fleet management and the end of fleet management to the fleet management server 31, and is formed using a mouse, a keyboard, and a touch panel (not shown) stacked on an LCD. The operator gives dispatch instructions to the dump trucks 20 via the input device 307 while watching a dispatch status screen of the dump trucks 20 as displayed on the display device 306.

In each dump truck 20, on the other hand, the on-board terminal device 200 and each of a travel drive system 210, the position calculating device 220 and a peripheral monitoring camera (which corresponds to an image capture device) 230 are connected via a control area network (CAN) 250. The CAN 250 is a communication channel for travel control data, own dump truck position information calculated by the position calculating device 220, and image data from the peripheral monitoring camera 230. The on-board terminal device 200 includes a CPU 201, an RAM 202, an ROM 203, an HDD 204, an I/F 205, and a bus 208. The on-board terminal device 200 has been configured by connecting the CPU 201, RAM 202, ROM 203, HDD 204 and the I/F 205 together via the bus 208. To the I/F 205, the CAN 250 and a communication device 260 are also connected.

The travel drive system 210 includes a brake device 211 for applying a brake to the dump truck 20, a steering device 212 for changing the steering angle of the dump truck 20, and an acceleration device 213 for accelerating the dump truck 20. Various control data outputted from the on-board terminal device 200 to the travel drive system 210 are called "travel control data".

The peripheral monitoring camera 230 captures images of periphery of the dump truck 20, and generates image data.

These travel control data and image data are transmitted to the on-board terminal device 200 via the CAN 250. Data that flow through the CAN 250 are each added with tag information, which includes a clock time, in accordance with its communication protocol. Using the clock times of such tag information, the travel control data and image data can be synchronized.

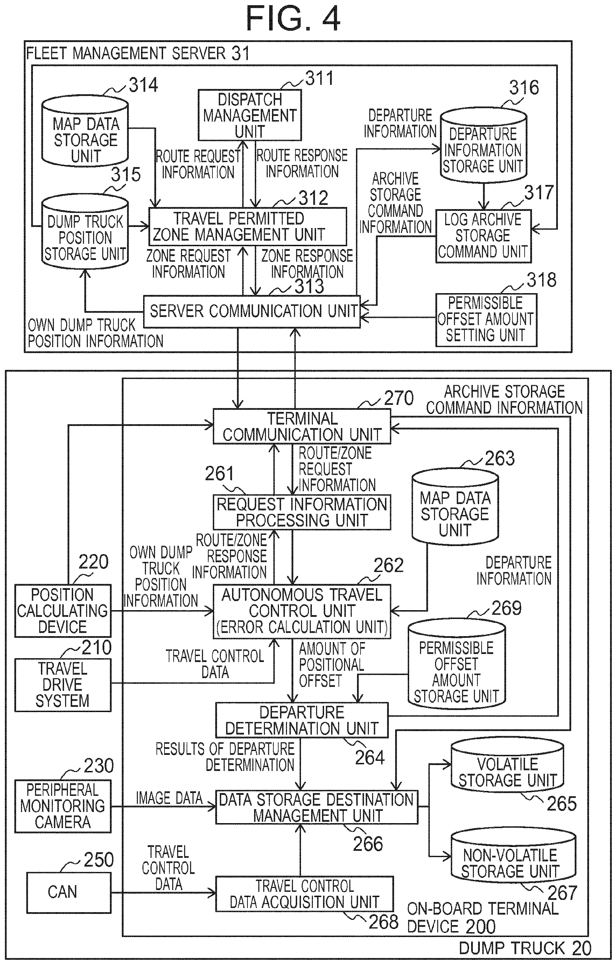

Next, with reference to FIG. 4, a description will be made about functional configurations of the fleet management server 31 and on-board terminal device 200. FIG. 4 is a block diagram illustrating the functional configurations of the fleet management server 31 and on-board terminal device 200 according to the first embodiment.

The on-board terminal device 200 includes a request information processing unit 261, an autonomous travel control unit 262, a map data storage unit 263, a departure determination unit 264, a volatile storage unit 265, a data storage destination management unit 266, a non-volatile storage unit 267, an travel control data acquisition unit 268, a permissible offset amount storage unit 269, and a terminal communication unit 270. The volatile storage unit 265 temporarily stores log data. When the remaining storage capacity drops to a low level, however, the volatile storage unit 265 sequentially overwrites beginning with the log data stored at an earliest clock time. Therefore, the log data stored in the volatile storage unit remain for a certain period of time (while there is a remaining storage capacity), but after that period, the log data are sequentially erased beginning with the earliest log data. The volatile storage unit 265 is composed of the RAM 202. In the non-volatile storage unit 267, on the other hand, the log data once stored are kept stored until instructions are received to erase them. The non-volatile storage unit 267 is composed of the HDD 204.

The fleet management server 31 includes a dispatch management unit 311, a travel permitted zone management unit 312, a server communication unit 313, a map data storage unit 314, a dump truck position storage unit 315, a departure information storage unit 316, a log archive storage command unit 317, and a permissible offset amount setting unit 318.

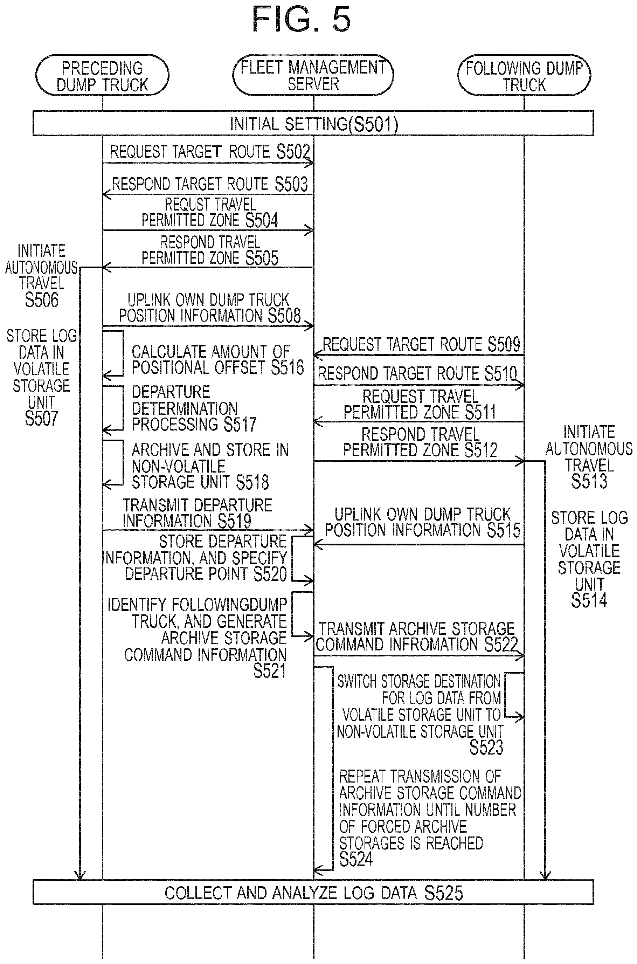

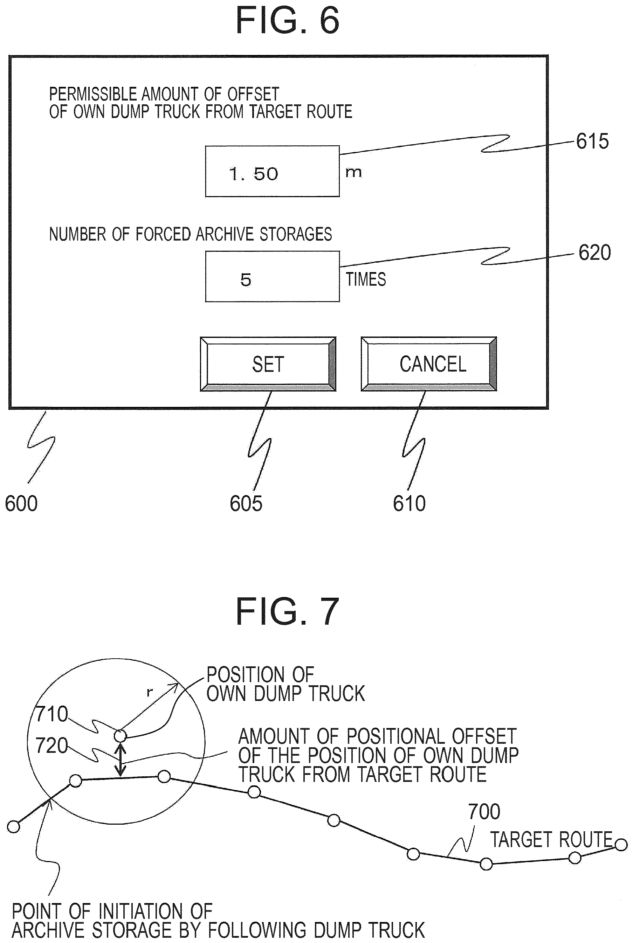

The functions of the individual blocks of the on-board terminal device 200 and fleet management sever 31 will be described with reference to FIGS. 5 to 7 in a description of a flow of logging processing in the autonomous travel system. FIG. 5 is a sequence diagram illustrating the flow of the logging processing. FIG. 6 is a view showing an example of an initial setting screen in the fleet management server. FIG. 7 is a diagram illustrating calculation processing of an amount of positional offset from a target route.

With reference to FIG. 5, a description will be made taking as an example a case in which two dump trucks are traveling on the same target route, and upon detection of a positional offset from the target route by the preceding dump truck, the fleet management server 31 instructs the following dump truck to collect log data.

Firstly, initial setting processing of the fleet management server 31 and the on-board terminal device 200 mounted on each dump truck is performed (S501) . The example of the initial setting screen in the fleet management server 31 is shown in FIG. 6. Upon initial setting, the permissible offset amount setting unit 318 displays the initial setting screen 600 of FIG. 6 on the display device 306. The initial setting screen 600 includes a set button 605 for setting a permissible value and a number of log data collections (number of force archive storages) to be inputted, a cancel button 610 that performs cancelation of the setting, a first box 615 that indicates a permissible amount of offset of the dump truck from the target route, and a second box 620 that indicates the number of forced archive storages. The permissible amount of offset from the target route as inputted in the initial setting screen 600 of FIG. 6 is transmitted to each dump truck 20, and is stored in the permissible offset amount storage unit 269 of each on-board terminal device 200. When the fleet management server 31 has received departure information from one of the dump trucks, the server communication unit 313 refers to the number of forced archive storages upon determining to how many following dump trucks the archive storage command information is to be transmitted.

In this embodiment, the permissible amount of offset is inputted at the fleet management server 31. As an alternative, an input device may be included in each on-board terminal device 200, and the operator may input and set the permissible amount of offset by using this input device. In this case, different amount of offset can be set for each on-board terminal device 200.

The request information processing unit 261 of the preceding dump truck, before initiation of travel, transmits route request information to the fleet management server 31 to request a target route (S502).

The dispatch management unit 311 of the fleet management server 31 determines a target route (a travel route from a start point to a destination), generates route response information indicative of the target route, and transmits the route response information to the preceding dump truck (S503).

Next, the request information processing unit 261 of the preceding dump truck generates zone request information to make a request for the setting of a travel permitted zone in the target route, where a travel permit is given only to the preceding dump truck and other dump trucks are prohibited to enter, and transmits the request from the terminal communication unit 270 (S504).

The travel permitted zone management unit 312 sets the travel permitted zone for the preceding dump truck, generates zone response information indicative of the travel permitted zone, and transmits the zone response information from the server communication unit 313 (S505). When the preceding dump truck comes close to a forward end of the travel permitted zone, the preceding dump truck again transmits zone request information to make a request for a new travel permitted zone, and receives zone response information. In this manner, the preceding dump truck continues to travel through the zones where only the own dump truck has been permitted to travel, whereby the preceding dump truck can avoid any interference with other dump trucks.

Upon receipt of the route response information and zone response information, the autonomous travel control unit 262 of the preceding dump truck initiates autonomous travel in the travel-permitted zone set as the target route with reference to the map data of the map data storage unit 263 (S506). The autonomous travel control unit 262 generates control data for controlling the steering angle and acceleration/deceleration to travel while tracing the target route, generates travel control data with clock time information added as tags in accordance with the CAN protocol, and outputs the travel control data together with the clock time information to the travel drive system 210 via the CAN 250. The travel drive system 210 operates according to the travel control data. Consequently, the dump truck 20 travels under control by the autonomous travel control unit 262.
during the autonomous travel, the peripheral monitoring camera 230 captures images of peripheral of the own dump truck, and generates image data. Further, the travel control data acquisition unit 268 acquires the travel control data from the CAN 250 or the autonomous travel control unit 262.

The data storage destination management unit 266 acquires the image data from the peripheral monitoring camera 230 and the travel control data from the travel control data acquisition unit 268, and synchronously write the image data and travel control data in the volatile storage unit 265 (S507). When the capacity of the volatile storage unit 265 has reached a minimum limit, these data are sequentially overwritten beginning with those stored at an earliest clock time. Therefore, the volatile storage unit 265 is required to have a capacity sufficient to store log data for a predetermined period of time from a point of time at which the amount of offset from the target route has exceeded the permissible amount of offset of own dump truck form target route, for example, sufficient to store log data from several ten seconds ago.

During the autonomous travel, the position calculating device 220 calculates the position of the own dump truck, and uplinks own dump truck position information together with dump truck identification information, which serves to identify the own dump truck, added thereto from the terminal communication unit 270 to the fleet management server 31 (S508) . The dump truck position storage unit 315 of the fleet management server 31 stores the own dump truck position information that the server communication unit 313 has received. As a consequence, the fleet management server 31 can manage the position of the dump truck 20 that is traveling in the mine. The uplink of the own dump truck position information is sequentially conducted. In FIG. 5, however, for the sake of convenience of description, only one uplink is illustrated with respect to each dump truck, and an illustration is omitted concerning other uplinks.

With respect to the following dump truck, its autonomous travel, the temporary storage of log data, and the uplink of own dump truck information are also conducted through similar steps as the preceding dump truck (S509 to S515) .

During the autonomous travel in step S506 onwards, the autonomous travel control unit 262 calculates the amount of positional offset between the target route and the own dump truck position (S516), and to the travel drive system 210, transmits control data to correct the positional offset. The autonomous travel control unit 262 calculates the amount of positional offset, and therefore corresponds to the error calculation unit.

The autonomous travel control unit 262 outputs the calculated amount of positional offset to the departure determination unit 264, and the departure determination unit 264 performs departure determination processing (S517). Described specifically, the departure determination unit 264 reads the permissible amount of offset stored in the permissible offset amount storage unit 269, and compares the calculated amount of positional offset and the permissible amount of offset with each other. If the amount of positional offset increases to the permissible amount of offset or greater (the clock time at this time will be called the "log collection initiation time point"), the departure determination unit 264 determines that the preceding dump truck has departed from the target route, and outputs the results of the departure determination to the data storage destination management unit 266.

Upon receipt of the determination that the preceding dump truck has departed from the target route, the data storage destination management unit 266 extracts log data (immediately-preceding log data) stored for a predetermined time preceding the log collection initiation time point as a basis in the volatile storage unit 265, and archives and stores the log data in the non-volatile storage unit 267 (S518) . By switching the data storage destination, the subsequent log data are to be stored in the non-volatile storage unit 267 until log collection termination conditions are met. As the "log collection termination conditions", it is possible to use that the time elapsed from the initiation of log data in the non-volatile storage unit 267 has exceeded a predetermined time or that the amount of positional offset has decreased to less than the permissible amount of offset (the dump truck 20 has returned to the target route).

If the departure determination unit 264 determines a departure in step S517, the departure determination unit 264 transmits departure information indicative of the departure together with the own dump truck position information and own dump truck identification information to the fleet management server 31 (S519).

Further, the fleet management server 31 stores, in the departure information storage unit 316, the departure information received by the server communication unit 313 (S520). The log archive storage command unit 317 specifies a departure point on the basis of the own dump truck position information of the preceding dump truck as received together with the departure information. On the basis of the own dump truck position information of each dump truck as stored in the dump truck position storage unit 315, the log archive storage command unit 317 then identifies the following dump truck that would next arrive at a point a predetermined distance (which corresponds to the radius r in FIG. 7) before the departure point, generates archive storage command information for the following dump truck (S521), and transmits the archive storage command information to the following dump truck (S522). The term "archive storage command" as used herein means a command that switches the storage destination for the log data of the own dump truck from the volatile storage unit to the non-volatile storage unit.

Upon receipt of the archive storage command information, the terminal communication unit 270 of the on-board terminal device 200 of the following dump truck outputs it to the data storage destination management unit 266. The data storage destination management unit 266 switches the storage destination for the log data from the volatile storage unit 265 to the non-volatile storage unit 267 in accordance with the archive storage command information. Subsequent log data will be written in the non-volatile storage unit 267 until the log collection termination conditions are met (S523).

The fleet management server 31 transmits the archive storage command information to dump trucks, which would pass through the departure point, until the number of forced archive storages as set in the initial setting screen of FIG. 6 is reached (S524). Here, if only dump trucks different from the preceding dump truck pass through the departure point within the number of forced archive storages, only these different dump trucks perform collection and processing of log data on the basis of the archive storage command information. If the preceding dump truck again passes through the departure point within the number of forced archive storages, on the other hand, the preceding dump truck may perform second log collection and processing.

The log data collected and processed by the respective dump trucks are then collected at the fleet management server 31, where an analysis is conducted for the cause of the departure from the target route (S525). If positional offsets are detected on other dump trucks (there are departures from the target route), the cause of the occurrence of the positional offset can be estimated with high probability to be environment-dependent rather than the own dump trucks. If there is an abnormality in the log data collected for the second time by the own dump truck and no abnormality is included in the log data collected by other dump trucks, on the other hand, the own dump truck can be estimated with high probability to be responsible. The collection and analysis of such log data may be either after completion of work by the respective dump trucks or during their autonomous travel.

To end the logging processing illustrated in FIG. 5, the operator may input an exit command through the input device 307 at the fleet management center 30, or the determination of an end as a result of the arrival of the dump truck 100 at the destination may be relied upon.

As illustrated in FIG. 7, the autonomous travel control unit 262 as the error calculation unit drops a perpendicular line from an own dump truck position 710 onto a target route 700, and calculates the length of the perpendicular line as an amount of positional offset 720 between the own dump truck position and the target route.

On the other hand, the log archive storage command unit 317 sets points, between which log data are to be archived and stored for the following dump trucks, on a boundary of radius r from the departure point. In FIG. 7, the points between which the log data are to be archived and stored are defined using a circular line about the departure point, but the boundary shall not be limited to such a circular shape. As an alternative, the points between which the log data are to be archived and stored may be set on the target route. In this case, the log data can still be archived and stored insofar as the following dump trucks are located on the boundary of radium r even if they are offset from the target route.

If a risk of collision arises due to a large amount of offset between the own dump truck position and the given target route, this embodiment makes it possible to acquire log data such as image data and travel control data before and after a departure irrespective of the existence or non-existence of other dump trucks or the travel speed of the own dump truck.

### <Second Embodiment>

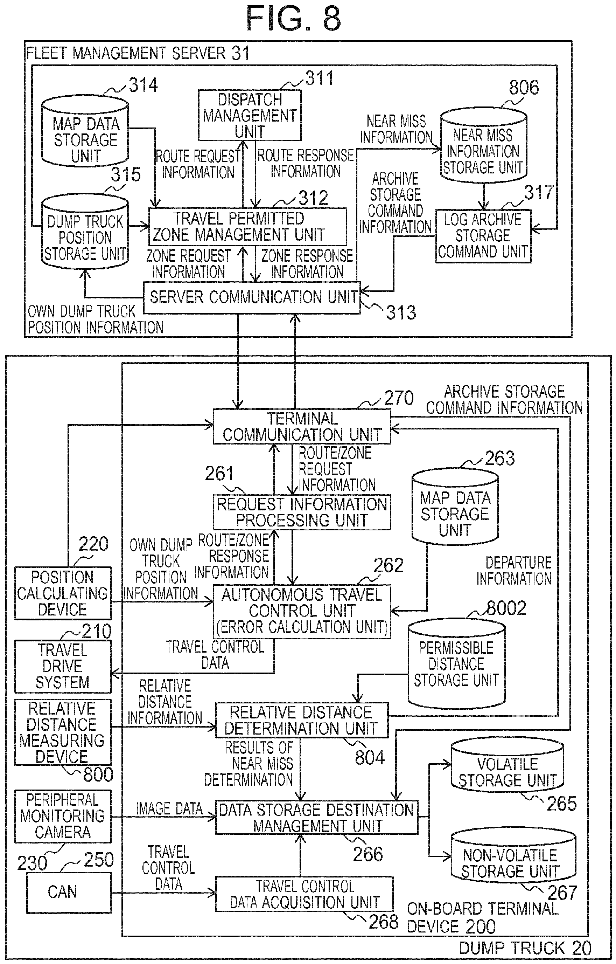

With reference to FIG. 8, a description will be made about a second embodiment. The second embodiment archives and stores log data from before a collision or interference by using, as a trigger, a relative distance from another dump truck. Referring to FIG. 8, a description will hereinafter be made about the second embodiment. FIG. 8 is a block diagram illustrating functional configurations of a fleet management server and on-board terminal device according to a second embodiment. The same elements as in the first embodiment are designated by the same reference numerals, and an overlapping description is omitted. It is to be noted that in the following description, the description will be made about an exemplary detection of a relative distance from another dump truck, but the object to be measured for the relative distance is not limited to another dump truck but may be an obstacle.

As illustrated in FIG. 8, the dump truck 20 includes a relative distance measuring device (millimeter-wave radar, or the like) 800 that measures a relative distance from another dump truck. On the other hand, the on-board terminal device 200 includes a relative distance determination unit 804 that determines if the relative distance has decreased to a predetermined distance threshold or smaller, and also a permissible distance storage unit 802 that stores a distance threshold (hereinafter called the "permissible distance") for determining existence or non-existence of a near miss.

On the other hand, the fleet management server 31 includes a near miss information storage unit 806.

During autonomous travel, the dump truck 20 measures a relative distance from another dump truck by the relative distance measuring device 800, and outputs relative distance information to the relative distance determination unit 804. The relative distance determination unit 804 compares the relative distance information with the permissible distance stored in the permissible distance storage unit 802. If the relative distance is determined to have decreased to the permissible distance or shorter, the relative distance determination unit 804 outputs near miss determination results, which are indicative of the results of the determination, to the data storage destination management unit 266. The data storage destination management unit 266 extracts immediately-preceding log data, which have been stored from before and until a time point that the relative distance has decreased to the predetermined distance threshold or smaller, out of the log data stored in the volatile storage unit 265, archives and stores the immediately-preceding log data in the non-volatile storage unit 267, and stores log data, which would be outputted after the time point that the relative distance has decreased to the distance threshold or smaller, in the non-volatile storage unit 267.

The relative distance determination unit 804 transmits the near miss information to the fleet management server 31 from the terminal communication unit 270. The fleet management server 31 stores the received near miss information (which is supposed to be associated with the own dump truck position information at the time of the near miss) in the near miss information storage unit 806. The log archive storage command unit 317 specifies the point of the near miss by using the near miss information stored in the near miss information storage unit 806 and the own dump truck position information stored in the dump truck position storage unit 315, and then identifies the following vehicle that would next arrive at a point within a predetermined distance from the point of the near miss. The log archive storage command unit 317 then generates archive storage command information for the specified following dump truck, and transmits it to the following dump truck from the server communication unit 313.

Upon arrival of the following dump truck, which has received the archive storage command information, at the point within the predetermined distance from the point of the near miss, the storage destination for the log data is switched from the volatile storage unit 265 to the non-volatile storage unit 267.

According to this embodiment, it is possible to determine the cause of a near miss on the basis of log data from before the near miss through collection of immediately-preceding log data by using a relative distance as a trigger. This embodiment is expected to find application in the determination of a sudden cause in the event that only the own dump truck encounters a near miss but other dump trucks are free from any near miss, for example, the detection of an unexpected deceleration of the preceding dump truck, the detection of a manned vehicle not subjected to management by the travel permitted zone management unit 312, and the like. If a near miss is also detected at the same point in other dump trucks or vehicles, a continuing cause is estimated, for example, such that the preceding dump truck or vehicle decelerates every time at the point on an upgrade or a failed dump truck or vehicle is at stop at the point. By estimating the cause, a measure can be taken to eliminate an obstructive factor against the normal travel of the dump truck 20.

The above-described embodiments are by no means intended to restrict the present invention, and various modifications shall also be encompassed by the present invention. For example, log data are not limited to those consisting of image data and travel control data in synchronization, but may be only either image data or travel control data or may use other data, for example, sensor data of an on-board sensor mounted on each mining machine.

In addition, the first embodiment and the second embodiment may be used in combination to perform archive storage, including immediately-preceding log data, by using as triggers both a positional offset from a target route and a near miss with another mining machine.

### Legends

- 1:: Autonomous travel system (logging system for mining machines)
- 20:: Dump truck (mining machine)
- 31:: Fleet management server (log management server)
- 200:: On-board terminal device

## Claims

1. A logging system for a mining machine that travels along a target route, the logging system comprising:
a position calculating device that measures a position of the mining machine as an own mining machine and outputs own mining machine position information, and
an on-board terminal device that stores log data indicative of travel conditions of the mining machine;
wherein the on-board terminal device comprises:
a volatile storage unit that upon generating of the log data, temporarily store the log data,
a non-volatile storage unit that continues to store immediately-preceding log data, which have been extracted from the log data temporarily stored in the volatile storage unit, until an instruction for data erasure is received,
a map data storage unit that stores map data indicative of the target route,
an error calculation unit that calculates an amount of positional offset of the own mining machine relative to the target route on a basis of the map data and the own mining machine position information,
a departure determination unit which determines that the own mining machine has departed from the target route if the calculated amount of positional offset has increased to a permissible amount of offset, at which the own machine is considered to be traveling on the target route, or greater, and
a data storage destination management unit that, if the departure determination unit determines to have departed, extracts immediately-preceding log data, which have been stored from before and until a time point of the departure, out of the log data temporarily stored in the volatile storage unit, archives and stores the immediately-preceding log data in the non-volatile storage unit, and stores log data, which would be outputted after the time point of the departure, in the non-volatile storage unit.

2. The logging system according to claim 1, wherein:
the mining machine further comprises an image capture device that captures images of periphery of the own mining machine and outputs image data; and
the log data includes the image data.

3. The logging system according to claim 2, wherein:
the mining machine further comprises an travel control data acquisition unit that acquires travel control data indicative of operational conditions of the mining machine during traveling; and
the volatile storage unit and non-volatile storage unit synchronously store the image data and the travel control data as the log data.

4. The logging system according to claim 1, wherein:
a plurality of mining machines, which are traveling on the same target route, are each connected to a log management server that performs collection and management of log data via wireless communication lines;
the on-board terminal device mounted on each mining machine further comprises a terminal communication unit that transmits, to the log management server, departure information, which indicates that the departure determination unit has determined to have departed, and own mining machine position information at the time point of the departure, and also that receives, from the log management server, archive storage command information that switches a storage destination for the log data of the own mining machine from the volatile storage unit to the non-volatile storage unit; and
the log management server comprises:
a server communication unit that receives the own mining machine position information at the time point of the departure and the departure information from the respective mining machines, and also that transmits the archive storage command information to following mining machines that are traveling behind the mining machine from which the departure information has been transmitted, and
a log archive storage command unit that specifies a departure point on a basis of the own mining machine position information at the time point of the departure, identifies one of the following mining machines, the one following mining machine being to next arrive at a point a predetermined distance before the departure point, on a basis of the own mining machine position information at the time of the departure as received from the respective mining machines, and also that generates the archive storage command information for the one following mining machine.

5. The logging system according to claim 1, wherein:
the log management server further comprises a permissible offset amount setting unit that sets the permissible amount of offset.

6. The logging system according to claim 1, wherein:
the mining machine further comprises a relative distance measuring device that measures a relative distance from another mining machine; and
the on-board terminal device further comprises a relative distance determination unit that determines if the relative distance has decreased to a predetermined distance threshold or smaller;
wherein, if the relative distance determination unit determines that the relative distance has decreased to the predetermined distance threshold or smaller, the data storage destination management unit extracts immediately-preceding log data, which have been temporarily stored from before and until a time point at which the relative distance has decreased to the predetermined distance threshold or smaller, out of the log data temporarily stored in the volatile storage unit, archives and stores the immediately-preceding log data in the non-volatile storage unit, and stores log data, which would be outputted after the time point at which the relative distance has decreased to the predetermined distance threshold or smaller, in the non-volatile storage unit.

7. An on-board terminal device to be mounted on a mining machine, which travels along a target route, for storing log data indicative of travel conditions of the mining machine, the on-board terminal device comprising:
a volatile storage unit that upon generation of the log data, temporarily store the log data,
a non-volatile storage unit that continues to store immediately-preceding log data, which have been extracted from the log data temporarily stored in the volatile storage unit, until an instruction for data erasure is received,
a map data storage unit that stores map data indicative of the target route,
an error calculation unit that calculates an amount of positional offset of the mining machine as an own mining machine relative to the target route on a basis of the map data and own mining machine position information obtained by measuring a position of the own mining machine,
a departure determination unit which determines that the own mining machine has departed from the target route if the calculated amount of positional offset has increased to a permissible amount of offset, at which the own machine is considered to be passing on the target route, or grater, and
a data storage destination management unit that, if the departure determination unit determines to have departed, extracts immediately-preceding log data, which have been stored from before and until a time point of the departure, out of the log data temporarily stored in the volatile storage unit, archives and stores the immediately-preceding log data in the non-volatile storage unit, and stores log data, which would be outputted after the time point of the departure, in the non-volatile storage unit.

8. A logging method for a mining machine to store log data indicative of travel conditions of the mining machine by using a volatile storage device and a non-volatile storage device both of which are mounted on the mining machine, the logging method comprising the following steps:
temporarily storing log data, in which image data generated by capturing images of peripheral of the mining machine as an own mining machine with an image capture device and travel control data indicative of operational conditions of the mining machine during traveling are synchronized, in the volatile storage device,
calculating, on a basis of own mining machine position information obtained by measuraring a position of the own machine and map data indicative of a predetermined target route for the own mining machine, an amount of positional offset of the own mining machine relative to the target route,
determining that the own mining machine has departed from the target route if the calculated amount of positional offset has increased to a permissible amount of offset, at which the own mining machine is considered to be traveling on the target route, or greater and
if determined to have departed, extracting immediately-preceding log data, which have been stored from before and until a time point of the departure, out of the log data temporarily stored in the volatile storage device, archiving and storing the immediately-preceding log data in the non-volatile storage device, and storing log data, which would be outputted after the time point of the departure, in the non-volatile storage device.

9. The logging method according to claim 8, wherein:
a preceding mining machine and following mining machines, which are traveling behind the preceding mining machine, are traveling on the same target route, and each mining machine is connected via wireless communication lines to a log management server that performs collection and management of log data; and
the logging method further comprises the following steps:
transmitting, from each mining machine to the log management server, own mining machine position information while traveling along the target route,
transmitting, from the preceding mining machine to the log management server, departure information indicative of having departed from the target route and own mining machine position information at a time point of the departure,
receiving, at the log management server, the departure information and the own mining machine position information at the time of the departure,
specifying a departure point on a basis of the received own mining machine position information at the time point of the departure, identifying one of the following mining machines, the one following mining machine being to next arrive at a point a predetermined distance before the departure point, on a basis of the own mining machine position information of the respective following mining machines as received from the respective following mining machines, generating for the one following mining machine archive storage command information that switches a storage destination for the log data from the volatile storage device to the non-volatile storage device, and transmitting the archive storage command information to the one following mining machine, all by the log management server,
receiving the archive storage command information at the one following mining machine, and
switching the storage destination for the log data of the own machine from volatile storage device to the non-volatile storage device at the one following mining machine.
